# FASCICULE DE BREVET EUROPEEN

(11) **EP 1 201 345 B1**
(45) Date de publication et mention de la délivrance du brevet: **14.11.2007**
(21) Numéro de dépôt: 01402522.5
(22) Date de dépôt: 01.10.2001
(51) Int. Cl.: B23K 9/167

(54) **Procédé de soudo-brasage TIG de toles galvanisées**
Schweiss-Löt-TIG-Verfahren für verzinkte Stahlbleche
Welding-brazing TIG method for galvanized sheets

(30) Priorité: 23.10.2000 FR 0013551
(43) Date de publication de la demande: 02.05.2002
(73) Titulaire: L'AIR LIQUIDE, Société Anonyme pour l'Etude et l'Exploitation des Procédés Georges Claude, 75007 Paris (FR)
(72) Inventeur: Cosson Stéphane, 95180 Menucourt (FR); Cazottes, Eric, 95440 Ecouen (FR); Darras, François, 78480 Verneuil sur Seine (FR)
(74) Mandataire: Pittis, Olivier

(56) Documents cités:
- EP-A- 0 509 778
- EP-A- 0 803 309
- WO-A-98/58758

## Description

La présente invention se rapporte à un procédé de soudo-brasage TIG (Tungsten Inert Gas) de tôles galvanisées ou électro-zinguées, en particulier utilisable pour souder des pièces destinées à former des parties de véhicules.

Aujourd'hui, dans l'industrie automobile, les tôles galvanisées ou électro-zinguées sont couramment utilisées pour fabriquer des véhicules.

Toutefois, obtenir un assemblage correct de telles tôles pose problème au plan industriel.

Ainsi, les principales difficultés liées au soudage des tôles galvanisées ou électro-zinguées sont, d'une part, d'éviter de percer les tôles fines, c'est-à-dire des tôles ayant des épaisseurs inférieures à 2 mm qui sont les plus répandues, et, d'autre part, d'éviter ou de minimiser les projections adhérentes pouvant résulter du procédé d'assemblage de ces tôles, en particulier lorsque ces projections risquent de se produire sur les faces ou côtés destinés à constituer des parties visibles du véhicule.

Actuellement, pour les assemblages manuels de tôles galvanisées ou électro-zinguées, les procédés couramment utilisés sont le soudo-brasage à la flamme, le soudage MIG (Metal Inert Gas) et le soudo-brasage MIG.

Cependant, aucun de ces procédés ne peut être considéré comme pleinement satisfaisant.

En effet, en soudo-brasage à la flamme, les produits d'apports sont coûteux et le procédé peut engendrer des déformation des tôles et reste salissant puisque le flux de brasage doit être ensuite éliminé.

Par ailleurs, le soudage MIG des fines épaisseurs est très difficile et très problématique à cause des projections qu'il occasionne et des risques de perçage qui se produisent et entraînent, dès lors, de nombreuses retouches post-soudage des tôles soudées.

En outre, le soudo-brasage MIG, qui combine procédé MIG et utilisation d'un fil d'apport de type cupro-aluminium ou cupro-silicium, engendre des projections facilement adhérentes sur les tôles qui doivent être ensuite être éliminées par post-traitement des tôles soudées.

Le but de la présente invention est alors de proposer un procédé efficace d'assemblage de pièces galvanisées ou électro-zinguées, c'est-à-dire recouvertes d'une couche superficielle de zinc, lequel ne présente pas les inconvénients susmentionnés et qui permettent de passer outre les difficultés liées à la présence de zinc sur les pièces à souder.

La solution est alors un procédé de soudo-brasage TIG, dans lequel on assemble au moins deux pièces métalliques galvanisées ou électro-zinguées en réalisant une fusion d'un fil d'apport fusible au moyen d'une torche de soudage TIG munie d'une électrode en tungstène alimentée en courant électrique, et en mettant en oeuvre une protection gazeuse, de manière à réaliser au moins un joint de soudure entre les dites pièces métalliques.

Selon le cas, le procédé de l'invention peut comprendre l'une ou plusieurs des caractéristiques suivantes :
- l'électrode en tungstène est alimentée en courant électrique alternatif de manière à générer au moins un arc électrique.
- le fil d'apport est en cupro-aluminium ou en cupro-silicium.
- le gaz de protection est choisi parmi l'argon et les mélanges d'argon et d'hélium, de préférence un mélange d'argon et d'hélium contenant jusqu'à 30% en volume d'hélium, le reste étant de l'argon.
- les pièces sont en aciers galvanisé ou électro-zingué avec un revêtement de zinc ayant une épaisseur de 3 à 50 microns.
- l'intensité du courant est comprise entre 30 A et 400 A, de préférence comprise entre 60 A et 250 A.
- le diamètre du fil est compris entre 0.4 mm et 2 mm, de préférence entre 0,6 mm et 1,2 mm.
- la vitesse de soudage, en manuel, est supérieure à 20 cm/min, de préférence comprise entre 30 cm/min et 100 cm /min.
- les pièces galvanisées ou électro-zinguées à souder sont des pièces entrant dans une structure de véhicule, en particulier des pièces de carrosserie.
- l'épaisseur des pièces est comprise entre 0.1 mm et 3 mm, de préférence de l'ordre de 0.5 mm à 2 mm.

En d'autres termes, l'invention repose essentiellement sur l'utilisation d'arc électrique obtenu par une torche de soudage TIG (Tunsgten Inert Gas) comme source de chaleur pour fondre un fil d'apport de brasage cupro-aluminium ou cupro-silicium.

Avantageusement, on met aussi en oeuvre un dévidage automatique du fil pour amener le fil de façon régulière et permettre ainsi d'atteindre des vitesses d'assemblage élevées, par exemple plus de 20 cm/min.

Le fait de mettre en oeuvre préférentiellement un procédé de soudage TIG avec un courant alternatif permet d'améliorer le soudage car engendrant un décapage du zinc en amont du bain de fusion.

La mise en oeuvre de l'invention peut être opérée au moyen d'un matériel de soudage TIG classique, par exemple une torche PROTIG™, un système d'alimentation DVT 1500 en fil fusible à cadenceur et un poste de soudage TIG SAF 300 ACDC ; ces équipements étant commercialisés par la société LA SOUDURE AUTOGENE FRANCAISE.

Le gaz de soudage utilisé est préférentiellement un mélange d'argon et d'hélium (à 20% en volume) commercialisé par la société L'AIR LIQUIDE sous la dénomination ARCAL 32™.

Le procédé de l'invention est particulièrement adapté au soudage des assemblages à clin, en particulier de pièces d'épaisseurs typiques de 0.57 mm, 0.69 mm, 0.97 mm ou 1.5 mm.

### Exemple

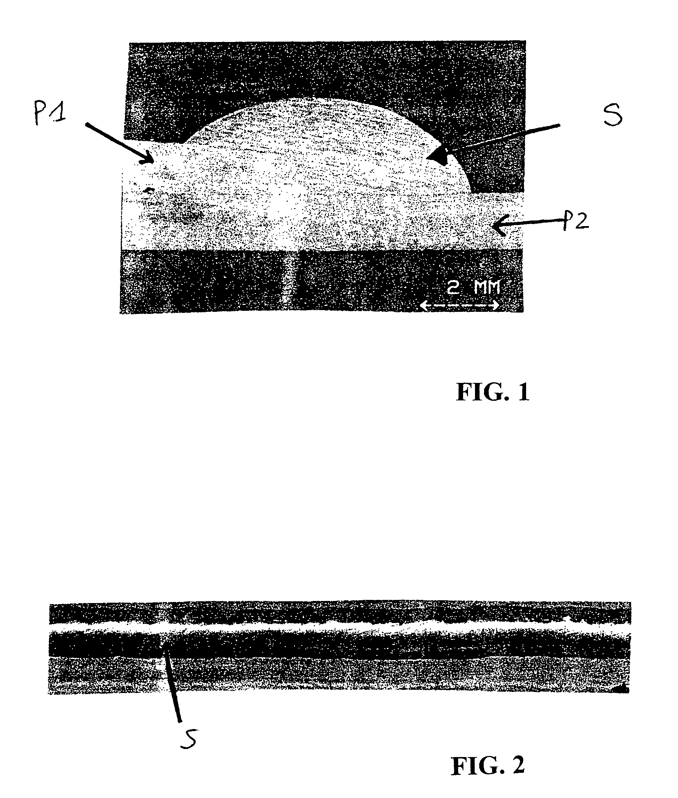

Afin de valider le procédé de l'invention, des essais ont été réalisés et les soudures obtenues sont schématisées sur les figures 1 et 2.

Le figure 1 montre une vue en coupe transversale d'un assemblage à clin, c'est-à-dire d'une soudure S obtenue avec le procédé de l'invention, pour une pièce P2 de 1.5 mm soudée à une pièce P1 de 1 mm.

Le fil utilisé est un fil d'apport en cupro-aluminium commercialisé par la société LA SOUDURE AUTOGENE FRANCAISE sous la référence NERTALIC™ 46.

L'intensité du courant alternatif a été fixée à 136 A, la vitesse du fil à 4 m/min, et l'électrode en tungstène avait un diamètre de 2.4 mm.

La vitesse de soudage atteinte, dans ce cas, a été de 45 cm/min environ.

La figure 2 montre une vue de dessus de la soudure S de la figure 1.

Le procédé de soudo-brasage selon l'invention permet d'obtenir les avantages suivants :
- un assemblage aisé des pièces,
- une vitesse d'assemblage de l'ordre de 35 à 45 cm/min, voire davantage ; la vitesse étant directement liée à l'intensité du courant,
- une absence totale de projections.
- une bonne tenue de l'électrode liée à l'utilisation du courant alternatif, c'est-à-dire à la phase de décapage.

## Revendications

1. - Procédé de soudo-brasage TIG, dans lequel on assemble au moins deux pièces métalliques galvanisées ou électro-zinguées en réalisant une fusion d'un fil d'apport fusible au moyen d'une torche de soudage TIG munie d'une électrode en tungstène alimentée en courant électrique, et en mettant en oeuvre une protection gazeuse, de manière à réaliser au moins un joint de soudure entre les dites pièces métalliques.

2. - Procédé selon la revendication 1, **caractérisé en ce que** l'électrode en tungstène est alimentée en courant électrique alternatif.

3. - Procédé selon l'une des revendications 1 ou 2, **caractérisé ce que** le fil d'apport est en cupro-aluminium ou en cupro-silicium.

4. - Procédé selon l'une des revendications 1 à 3, **caractérisé en ce que** le gaz de protection est choisi parmi l'argon et les mélanges d'argon et d'hélium, de préférence un mélange d'argon et d'hélium contenant jusqu'à 30% en volume d'hélium, le reste étant de l'argon.

5. - Procédé selon l'une des revendications 1 à 4, **caractérisé en ce que** les pièces sont en aciers galvanisé ou électro-zingué avec un revêtement de zinc ayant une épaisseur de 3 à 50 microns.

6. - Procédé selon l'une des revendications 1 à 5, **caractérisé en ce que** l'intensité du courant est comprise entre 30 A et 400 A, de préférence comprise entre 60 A et 250 A.

7. - Procédé selon l'une des revendications 1 à 6, **caractérisé en ce que** le diamètre du fil est compris entre 0.4 mm et 2 mm, de préférence entre 0,6 mm et 1,2 mm.

8. - Procédé selon l'une des revendications 1 à 7, **caractérisé en ce que** la vitesse de soudage, en manuel, est supérieure à 20 cm/min, de préférence comprise entre 30 cm/min et 100 cm /min.

9. - Procédé selon l'une des revendications 1 à 8, **caractérisé en ce que** les pièces galvanisées ou électro-zinguées à souder sont des pièces entrant dans une structure de véhicule, en particulier des pièces de carrosserie.

10. - Procédé selon l'une des revendications 1 à 9, **caractérisé en ce que** l'épaisseur des pièces est comprise entre 0.1 mm et 3 mm, de préférence de l'ordre de 0.5 mm à 2 mm.

## Claims

1. TIG braze-welding process in which at least two galvanized or electrogalvanized metal workpieces are joined together by melting a consumable filler wire by means of a TIG welding torch provided with a tungsten electrode supplied with electric current and by employing a gas shield so as to produce at least one welded joint between said metal workpieces.

2. Process according to Claim 1, **characterized in that** the tungsten electrode is supplied with an AC electric current.

3. Process according to either of Claims 1 and 2, **characterized in that** the filler wire is made of copper-aluminium or copper-silicon.

4. Process according to one of Claims 1 to 3, **characterized in that** the shielding gas is chosen from argon and argon/helium mixtures, preferably an argon/helium mixture containing up to 30% helium by volume, the rest being argon.

5. Process according to one of Claims 1 to 4, **characterized in that** the workpieces are made of galvanized or electrogalvanized steel with a zinc coating having a thickness of 3 to 50 microns.

6. Process according to one of Claims 1 to 5, **characterized in that** the intensity of the current is between 30 A and 400 A, preferably between 60 A and 250 A.

7. Process according to one of Claims 1, to 6, **characterized in that** the diameter of the wire is between 0.4 mm and 2 mm, preferably between 0.6 mm and 1.2 mm.

8. Process according to one of Claims 1 to 7, **characterized in that** the welding speed in manual mode is greater than 20 cm/min, preferably between 30 cm/min and 100 cm/min.

9. Process according to one of Claims 1 to 8, **characterized in that** the galvanized or electrogalvanized workpieces to be welded are parts for a vehicle structure, in particular body parts.

10. Process according to one of Claims 1 to 9, **characterized in that** the thickness of the workpieces is between 0.1 mm and 3 mm, preferably around 0.5 mm to 2 mm.

## Patentansprüche

1. WIG-Schweißverfahren, bei welchem mindestens zwei metallische Werkstücke, die feuerverzinkt oder elektrolytisch verzinkt sind, zusammengefügt werden, wobei ein drahtförmiger, schmelzbarer Schweißzusatz mittels eines WIG-Schweißbrenners, der mit einer Wolframelektrode, die unter elektrischem Strom steht, versehen ist, zum Schmelzen gebracht wird, und wobei ein Schutzgas zum Einsatz kommt, um auf diese Weise zwischen den metallischen Werkstücken mindestens eine Schweißverbindung zu schaffen.

2. Verfahren nach Anspruch 1, **dadurch gekennzeichnet, dass** die Wolframelektrode unter elektrischem Wechselstrom steht.

3. Verfahren nach einem der Ansprüche 1 oder 2, **dadurch gekennzeichnet, dass** der drahtförmige Schweißzusatz aus Aluminiumbronze oder aus Siliziumbronze besteht.

4. Verfahren nach einem der Ansprüche 1 bis 3, **dadurch gekennzeichnet, dass** das Schutzgas aus Argon und Gemischen aus Argon und Helium gewählt ist, wobei vorzugsweise ein Gemisch aus Argon und Helium zum Einsatz kommt, das bis zu 30 Vol.-% an Helium enthält, wobei Argon den Rest ausmacht.

5. Verfahren nach einem der Ansprüche 1 bis 4, **dadurch gekennzeichnet, dass** die Werkstücke derart feuerverzinkt oder elektrolytisch verzinkt sind, dass sie eine zinkbeschichtung aufweisen, deren Dicke 3 bis 50 Mikrometer beträgt.

6. Verfahren nach einem der Ansprüche 1 bis 5, **dadurch gekennzeichnet, dass** der Strom eine Stromstärke zwischen 30 A und 400 A, vorzugsweise zwischen 60 A und 250 A, aufweist.

7. Verfahren nach einem der Ansprüche 1 bis 6, **dadurch gekennzeichnet, dass** der Durchmesser des Drahtes zwischen 0,4 mm und 2 mm, vorzugsweise zwischen 0,6 mm und 1,2 mm beträgt.

8. Verfahren nach einem der Ansprüche 1 bis 7, **dadurch gekennzeichnet, dass** die Schweißgeschwindigkeit, bei manueller Ausführung, höher als 20 cm/min ist und vorzugsweise zwischen 30 cm/min und 100 cm/min liegt.

9. Verfahren nach einem der Ansprüche 1 bis 8, **dadurch gekennzeichnet, dass** es sich bei den zu verschweißenden feuerverzinkten oder elektrolytisch verzinkten Werkstücken um Teile handelt, die zum Bau eines Fahrzeugrahmens dienen, insbesondere um Karosserieteile.

10. Verfahren nach einem der Ansprüche 1 bis 9, **dadurch gekennzeichnet, dass** die Dicke der Werkstücke zwischen 0,1 mm und 3 mm beträgt und vorzugsweise in der Größenordnung von 0,5 mm bis 2 mm liegt.
